# EUROPÄISCHE PATENTSCHRIFT

(11) **EP 3 995 748 B1**
(45) Veröffentlichungstag und Bekanntmachung des Hinweises auf die Patenterteilung: **17.04.2024**
(21) Anmeldenummer: 20206096.8
(22) Anmeldetag: 06.11.2020
(51) Int. Cl.: F24F 13/02, F24F 13/08, F24F 13/32, F24F 12/00, F16L 41/02, F16L 55/09

(54) **RAUMLÜFTUNGSSYSTEM**
ROOM VENTILATION SYSTEM
SYSTÈME DE VENTILATION DES LOCAUX

(43) Veröffentlichungstag der Anmeldung: 11.05.2022
(73) Patentinhaber: Hoval Aktiengesellschaft, 9490 Vaduz (LI)
(72) Erfinder: MERHAR, Thomas, 9494 Schaan (LI); BENVENUTI, Thomas, 6971 Hard (AT); GABATHULER, Ronny, 9467 Frümsen (CH)
(74) Vertreter: Zenz Patentanwälte Partnerschaft mbB

(56) Entgegenhaltungen:
- EP-A1- 2 840 325
- EP-A1- 2 944 889
- EP-A1- 3 543 622
- EP-A2- 1 959 208
- DE-U1-202013 100 986

## Beschreibung

Die Erfindung ist auf ein Raumlüftungssystem mit einem Lüftungsgerät gerichtet, wobei das Lüftungsgerät ein Gerätegehäuse aufweist, in welchem wenigstens ein Filterelement, wenigstens ein Wärme-Rückgewinner und wenigstens eine Ventilatoren-Einheit untergebracht sind, wobei das Gerätegehäuse wenigstens eine Gerätekopplungsseite mit wenigstens zwei Kopplungsanschlüssen aufweist.

Bekanntermaßen werden im Bereich der Wohnraumlüftung sogenannte Raumlüftungssysteme verwendet, welche jeweils ein Lüftungsgerät aufweisen. Das Lüftungsgerät übernimmt dabei die kontinuierliche Frischluftversorgung der Wohnräume, welche rund um die Uhr und ganz ohne Zugluft mit frischer, sauerstoffreicher Luft versorgt werden. Verbrauchte Luft und Gerüche werden über das Lüftungsgerät über die Abluft weggeführt. Wertvolle Heizwärme, die beim Lüften mit Fenstern verloren gehen würde, bleibt durch eine in dem Lüftungsgerät integrierte Wärmerückgewinnung im Gebäude. Durch Filterelemente werden Schmutzpartikel, Staub und Pollen ausgefiltert. Die Platzverhältnisse rund um das Lüftungsgerät sind meist beengt. Dies erfordert unter anderem auch eine hohe Variabilität der Anbauteile, damit eine Einbaulösung gefunden werden kann. Zudem muss oft auf kleinem Raum die zu dem Lüftungsgerät hingeführt und/oder von dem Lüftungsgerät weggeführte Luft um 90° oder mehr umgelenkt werden. Ferner ist es bekannt, dass bei den Lüftungsgeräten auf dem Markt zwei unterschiedliche Bauformen existieren. Bei der ersten Bauform sind alle Luftanschlüsse (Außenluft, Fortluft, Zuluft, Abluft) auf einer Seite des Lüftungsgerätes angeordnet, wohingegen bei der zweiten Bauform die "kalten" Anschlüsse (Außenluft, Fortluft) auf der einen Seite des Lüftungsgerätes und die "warmen" Anschlüsse (Zuluft, Abluft) auf der anderen Seite des Lüftungsgerätes angeordnet sind. Für solche Lüftungsgeräte sind aus dem Stand der Technik quaderförmige Lüftungsgerät-Luftleitungsbauteile bekannt, wobei ein solches Lüftungsgerät-Luftleitungsbauteil beispielsweise auf die Oberseite eines Lüftungsgerätes aufgesetzt angeordnet ist und dort mit entsprechenden Luftanschlüssen verbunden ist. Zur Führung der verschiedenen Luftarten sind in einem solchen quaderförmigen Lüftungsgerät-Luftleitungsbauteile Luftkanäle ausgebildet, deren Anzahl der an das Lüftungsgerät-Luftleitungsbauteil angeschlossenen Luftanschlüsse (Außenluft, Fortluft, Zuluft, Abluft) des Lüftungsgerätes entspricht. Dabei sind meist solche quaderförmigen Lüftungsgerät-Luftleitungsbauteile meist als Schalldämpfer und lediglich für ein bestimmtes Lüftungsgerät ausgebildet, da die Anordnung der Luftanschlüsse (Außenluft, Fortluft, Zuluft, Abluft) an einem Lüftungsgerät nicht nur von Hersteller zu Hersteller, sondern auch für verschiedene Lüftungsgeräte eines Herstellers variiert. Es ist ersichtlich, dass die Führung der verschiedenen Luftarten (Außenluft, Fortluft, Zuluft, Abluft) direkt an dem Lüftungsgerät eine große Herausforderung an die Planung des Einbauorts hinsichtlich eines minimalen Raumbedarfs stellt. Aus der EP 2 840 325 A1 ist ein modulares Lüftungssystem mit einem Luftverteiler bekannt, welcher einen Grundkörper mit mehreren Seitenflächen aufweist. Der Luftverteiler ist mit einem Modul kombinierbar und dadurch um zusätzliche Anschlussmöglichkeiten erweiterbar. Durch die Erweiterung um das Modul sind bei dem Luftverteiler drei Seitenflächen mit jeweils einer Öffnung vorhanden. Mit Hilfe eines Deckels können bestimmte Öffnungen derart verschlossen werden, dass entweder eine geradlinige Luftführung oder eine umgelenkte Luftführung durch den Grundkörper realisierbar ist.

Aus der EP 3 543 622 A1 ist ein gattungsgemäßes Raumlüftungssystem bekannt.

Der Erfindung liegt die Aufgabe zugrunde eine Lösung zu schaffen, die auf konstruktiv einfache Weise ein verbessertes Raumlüftungssystem mit einem Lüftungsgerät und wenigstens zwei Lüftungsgerät-Luftleitungsbauteilen bereitstellt, welches sich durch eine hohe Flexibilität hinsichtlich der Anordnung der Luftanschlüsse eines Lüftungsgerätes und durch einen minimalen Raumbedarf auszeichnet.

Diese Aufgabe wird erfindungsgemäß gelöst durch ein Raumlüftungssystem mit den Merkmalen gemäß dem Patentanspruch 1.

Das erfindungsgemäße Raumlüftungssystem weist ein Lüftungsgerät und wenigstens zwei Lüftungsgerät-Luftleitungsbauteile auf, wobei das Lüftungsgerät ein Gerätegehäuse aufweist, in welchem wenigstens ein Filterelement, wenigstens ein Wärme-Rückgewinner und wenigstens eine Ventilatoren-Einheit untergebracht sind, wobei das Gerätegehäuse wenigstens eine Gerätekopplungsseite mit wenigstens zwei Kopplungsanschlüssen aufweist, und wobei ein jeweiliger Kopplungsanschluss des Lüftungsgerätes mit der Geräteanschlussöffnung strömungsverbunden ist. Ein jeweiliges Lüftungsgerät-Luftleitungsbauteil weist einen Grundkörper mit einer Vielzahl von Seitenflächen auf, welche einen Innenraum des Grundkörpers begrenzen. Auf einer ersten Seitenfläche des Grundkörpers ist eine Geräteanschlussöffnung ausgebildet. Ferner ist auf einer zweiten Seitenfläche des Grundkörpers eine erste Anschlussöffnung ausgebildet, wobei die erste Seitenfläche der zweiten Seitenfläche gegenüberliegend angeordnet ausgebildet ist, d.h. die Geräteanschlussöffnung ist der ersten Anschlussöffnung gegenüberliegend angeordnet ausgebildet. Zusätzlich ist auf einer dritten Seitenfläche des Grundkörpers eine zweite Anschlussöffnung ausgebildet, wobei die dritte Seitenfläche die erste Seitenfläche mit der zweiten Seitenfläche verbindet. An dem Grundkörper ist eine Verschlusseinrichtung befestigt, wobei die Verschlusseinrichtung entweder die erste Anschlussöffnung dichtend verschließend angeordnet ist, so dass die Geräteanschlussöffnung über den Innenraum mit der zweiten Anschlussöffnung strömungsverbunden ist, oder die zweite Anschlussöffnung dichtend verschließend angeordnet ist, so dass die Geräteanschlussöffnung über den Innenraum mit der ersten Anschlussöffnung strömungsverbunden ist.

Vorteilhafte und zweckmäßige Ausgestaltungen und Weiterbildungen der Erfindung ergeben sich aus den entsprechenden Unteransprüchen.

Durch die Erfindung werden ein Raumlüftungssystem mit wenigstens zwei Lüftungsgerät-Luftleitungsbauteilen zur Verfügung gestellt, die sich durch eine einfache Konstruktion auszeichnen. Dadurch, dass eine Geräteanschlussöffnung zur Verbindung mit dem Lüftungsgerät, zwei Anschlussöffnungen und eine Verschlusseinrichtung vorgesehen sind, kann mit Hilfe der Verschlusseinrichtung eine der beiden Anschlussöffnungen je nach Einbausituation des Lüftungsgerätes abgedichtet werden, um eine im Wesentlichen geradlinige Luftführung oder eine im Wesentlichen um 90° gebogene Luftführung durch das Lüftungsgerät-Luftleitungsbauteil zu realisieren. Ist die Luftführung festgelegt, dann kann die Verschlusseinrichtung in der entsprechenden Anschlussöffnung befestigt werden, wobei die Verschlusseinrichtung dabei lösbar in der entsprechenden Anschlussöffnung befestigt sein kann oder wobei die Verschlusseinrichtung über eine nicht lösbare Verbindung befestigt wird. Somit kann bei einem Lüftungsgerät mit insgesamt vier Luftanschlüssen für die Außenluft, die Fortluft, die Zuluft und die Abluft für jeden Luftanschluss mit einem jeweiligen Lüftungsgerät-Luftleitungsbauteil die Luftführung individuell definiert und festgelegt werden, wie diese von dem Lüftungsgerät fortgeführt oder zu dem Lüftungsgerät hingeführt werden soll, wobei bei vier Luftanschlüssen für das Lüftungsgerät dementsprechend vier Lüftungsgerät-Luftleitungsbauteile vorzusehen sind. Dementsprechend kann durch die Verwendung der erfindungsgemäßen Lüftungsgerät-Luftleitungsbauteile eine raumsparende Anordnung des Lüftungsgerätes realisiert werden.

Die Erfindung sieht in Ausgestaltung des Lüftungsgerät-Luftleitungsbauteils vor, dass der Grundkörper die Form eines extrudierten Vierecks aufweist. Insbesondere kann in Ausgestaltung des erfindungsgemäßen Lüftungsgerät-Luftleitungsbauteils der Grundkörper die Form eines Quaders aufweisen. Somit können je nach Bauart des Lüftungsgerätes zwei oder vier Lüftungsgerät-Luftleitungsbauteile auf einer Seite des Lüftungsgerätes verwendet und nebeneinanderliegend angeordnet werden, wodurch der optische Eindruck eines einzigen Aufsatzes entsteht, was den ästhetischen Eindruck des Lüftungsgerätes mit den Lüftungsgerät-Luftleitungsbauteilen deutlich erhöht.

Vorzugsweise sind in weiterer Ausgestaltung der Erfindung die Geräteanschlussöffnung und die erste Anschlussöffnung unter einem Winkel von 180° zueinander angeordnet. Alternativ ist für die erste Anschlussöffnung auch eine davon abweichende Anordnung um 25° in beide Richtungen denkbar, so dass die Geräteanschlussöffnung und die erste Anschlussöffnung unter einem Winkel im Bereich zwischen 155° und 205° zueinander angeordnet sind.

Ebenso sind vorzugsweise die Geräteanschlussöffnung und die zweite Anschlussöffnung unter einem Winkel von 90° zueinander angeordnet. Dabei ist ebenso eine davon abweichende Anordnung um 25° in beide Richtungen denkbar, so dass die Geräteanschlussöffnung und die zweite Anschlussöffnung unter einem Winkel im Bereich zwischen 65° und 115° zueinander angeordnet sind.

Die Erfindung sieht in weiterer Ausgestaltung vor, dass die Verschlusseinrichtung, wenn die Verschlusseinrichtung die erste Anschlussöffnung dichtend verschließend angeordnet ist, mit einem Stopfen-Element und einem Umlenkelement ausgebildet ist, wobei das Stopfen-Element innerhalb der ersten Anschlussöffnung befestigt ist und die erste Anschlussöffnung dichtend verschließt, und wobei das Umlenk-Element mit dem Stopfen-Element verbunden ist und sich innerhalb des Innenraumes erstreckt. Folglich ist die Verschlusseinrichtung nur dann mit einem Umlenk-Element ausgestattet, wenn eine Luftführung von der zweiten Anschlussöffnung zu der Geräteanschlussöffnung erwünscht ist. Das Stopfen-Element ist dabei derart ausgebildet, dass es in Abhängigkeit seiner Anordnung entweder mit der zweiten Seitenfläche oder mit der dritten Seitenfläche flächenbündig abschließt bzw. angeordnet ist.

Für einen optimierten und optimalen Strömungsverlauf ist in weiterer Ausgestaltung vorgesehen, dass das Umlenk-Element mit einer von der Geräteanschlussöffnung hin zu der zweiten Anschlussöffnung gekrümmt verlaufenden und zur Strömungsumlenkung dienenden Wölbung ausgebildet ist. Auf dieser Weise können in vorteilhafter Weise strömungstechnisch ungünstige Verwirbelungen innerhalb des Innenraumes des Lüftungsgerät-Luftleitungsbauteils vermieden oder zumindest deutlich reduziert werden.

Die Flexibilität des Lüftungsgerät-Luftleitungsbauteils ist so groß, dass das Lüftungsgerät-Luftleitungsbauteil auch als Sockel verwendet werden kann, welcher das Lüftungsgerät trägt. Zu diesem Zweck ist in weiterer Ausgestaltung der Erfindung vorgesehen, dass an der zweiten Seitenfläche mehrere Standfüße befestigt sind. Die Befestigung kann dabei entweder als feste Verbindung ausgeführt sein, bei welcher sich die Standfüße nach Befestigung nicht mehr ohne Beschädigung des Lüftungsgerät-Luftleitungsbauteils von diesem lösen lassen. Es ist aber auch denkbar, dass eine lösbare Verbindung vorgesehen ist.

Zur weiteren Erhöhung der Flexibilität, damit die Standfüße auch bei Bedarf auch wieder entfernt werden können, sieht die Erfindung in weiterer Ausgestaltung vor, dass ein jeweiliger Standfuß über ein in die zweite Seitenfläche eingeschweißtes Einlegeteil an der zweiten Seitenfläche lösbar befestigt ist. Dabei kann das Einlegeteil beispielsweise ein Gewindeelement sein, in welches ein Standfuß eingeschraubt ist. Ein solches als Gewindeelement ausgebildetes Einlegeteil dient zum Ausgleich von Bodenunebenheiten und bewirkt eine gleichmäßige Lastverteilung auf die einzelnen Standfüße.

In Ausgestaltung ist ferner vorgesehen, dass an mindestens einer Seitenfläche des Grundkörpers, welche an die die Geräteanschlussöffnung aufweisende Seitenfläche angrenzt, mindestens eine zur lösbaren Verbindung mit einem Verbindungsbolzen ausgebildete Aufnahmeausnehmung ausgebildet ist. Auf diese Weise können zum Beispiel zwei nebeneinander liegend angeordnete Lüftungsgerät-Luftleitungsbauteile miteinander verbunden werden, was die Stabilität der Anordnung spürbar erhöht. Ebenso ist es denkbar, dass statt einer Verbindung mit einem benachbarten Lüftungsgerät-Luftleitungsbauteil eine Abdeckplatte an der Seitenfläche des Lüftungsgerät-Luftleitungsbauteils, welche die Verbindungsbolzen aufweist, lösbar befestigt ist, wobei die Abdeckplatte dann entsprechende Aufnahmeausnehmungen für die Bolzen aufweist und bündig mit dem Lüftungsgerät angeordnet werden kann. Auf diese Weise kann die optische Erscheinung von Lüftungsgerät und Lüftungsgerät-Luftleitungsbauteilen erhöht werden, wobei dabei ein optischer Eindruck erzeugt werden kann, dass Lüftungsgerät und Lüftungsgerät-Luftleitungsbauteile ein gemeinsames Bauteil darstellen.

Vorteilhaft ist es dabei in weiterer Ausgestaltung der Erfindung, wenn der Grundkörper aus einem dampfdiffusionsdichten und/oder wärmeisolierenden Werkstoff besteht. Als geeigneter Werkstoff ist es dabei denkbar, dass der Grundkörper aus einem thermoplastischen Kunststoff besteht. Beispielsweise kann für den Grundkörper expandiertes Polypropylen (EPP) verwendet werden.

Gemäß einer Ausgestaltung für das Raumlüftungssystem sieht die Erfindung vor, dass ein jeweiliges Lüftungsgerät-Luftleitungsbauteil um eine Achse, die durch den mit dem Lüftungsgerät verbundenen Kopplungsanschluss verläuft, relativ verdrehbar ausgebildet ist. Sofern der Grundkörper dabei die Form eines extrudierten Vierecks und/oder eines Quaders aufweist, sind damit Anordnungen bzw. Drehungen des Lüftungsgerät-Luftleitungsbauteils von 0°, 90°, 180°, 270° und 360° um die durch den mit dem Lüftungsgerät verbundenen Kopplungsanschluss verlaufende Achse möglich.

In weiterer Ausgestaltung des Raumlüftungssystems ist dann vorgesehen, dass die Geräteanschlussöffnung des Lüftungsgerät-Luftleitungsbauteils und ein zugeordneter Kopplungsanschluss des Lüftungsgerätes oder eine Geräteanschlussöffnung eines ersten Lüftungsgerät-Luftleitungsbauteils und eine Geräteanschlussöffnung eines zweiten Lüftungsgerät-Luftleitungsbauteils zusammensteckbar ausgebildet sind. Die Zusammensteckbarkeit erleichtert den Zusammenbau des Raumlüftungssystems und ermöglicht darüber hinaus auch die Verwendung von mehreren Lüftungsgerät-Luftleitungsbauteilen, die miteinander verbunden werden können, um beispielsweise eine um 180° umgelenkte Luftführung zu ermöglichen.

Die Erfindung sieht in weiterer Ausgestaltung des Raumlüftungssystems vor, dass an der zweiten Seitenfläche eines jeweiligen Lüftungsgerät-Luftleitungsbauteils mehrere Standfüße befestigt sind und die wenigstens zwei Lüftungsgerät-Luftleitungsbauteile als das Lüftungsgerät tragende und abstützende Sockel ausgebildet sind. Die Befestigung kann dabei entweder als feste Verbindung ausgeführt sein, bei welcher sich die Standfüße nach Befestigung nicht mehr ohne Beschädigung des Lüftungsgerät-Luftleitungsbauteils von diesem lösen lassen. Es ist aber auch denkbar, dass eine lösbare Verbindung vorgesehen ist.

Schließlich ist es in weiterer Ausgestaltung der Erfindung von Vorteil, wenn ein jeweiliger Standfuß über ein in die zweite Seitenfläche eingeschweißtes Einlegeteil an der zweiten Seitenfläche lösbar befestigt ist. Das Einlegeteil kann zum Beispiel als ein Gewindeelement ausgebildet sein, in welches ein Standfuß eingeschraubt ist. Ein solches als Gewindeelement ausgebildetes Einlegeteil bewirkt, dass die Standfüße höhenverstellbar angebracht sind, und sorgt für einen Ausgleich von Bodenunebenheiten und eine gleichmäßige Lastverteilung auf die einzelnen Standfüße.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes und bevorzugtes Ausführungsbeispiel der Erfindung dargestellt ist.

In der Zeichnung zeigt:
Figur 1 eine perspektivische Ansicht auf ein bekanntes Lüftungsgerät gemäß einer ersten Bauart,
Figur 2 eine Perspektivansicht auf ein erfindungsgemäßes Raumlüftungssystem mit dem in Figur 1 gezeigten Lüftungsgerät und mehreren Lüftungsgerät-Luftleitungsbauteilen,
Figur 3 eine perspektivische Ansicht auf ein bekanntes Lüftungsgerät gemäß einer zweiten Bauart,
Figur 4 eine Perspektivansicht auf ein erfindungsgemäßes Raumlüftungssystem mit dem in Figur 3 gezeigten Lüftungsgerät und mehreren Lüftungsgerät-Luftleitungsbauteilen,
Figur 5 eine perspektivische Draufsicht auf ein Lüftungsgerät-Luftleitungsbauteil,
Figur 6 eine perspektivische Unteransicht auf das Lüftungsgerät-Luftleitungsbauteil,
Figur 7 eine perspektivische Schnittansicht des Lüftungsgerät-Luftleitungsbauteils,
Figur 8 eine perspektivische Ansicht auf das Lüftungsgerät-Luftleitungsbauteil mit einer an einer Seitenfläche angebrachten Abdeckplatte,
Figur 9 eine perspektivische Einzelteildarstellung des Lüftungsgerät-Luftleitungsbauteils,
Figur 10a eine perspektivische Draufsicht auf das Lüftungsgerät-Luftleitungsbauteil mit einer in der ersten Anschlussöffnung angeordneten Verschlusseinrichtung,
Figur 10b eine perspektivische Unteransicht auf das Lüftungsgerät-Luftleitungsbauteil mit der in der ersten Anschlussöffnung angeordneten Verschlusseinrichtung,
Figur 10c eine perspektivische Schnittansicht auf das Lüftungsgerät-Luftleitungsbauteil mit der in der ersten Anschlussöffnung angeordneten Verschlusseinrichtung,
Figur 11a eine perspektivische Draufsicht auf das Lüftungsgerät-Luftleitungsbauteil mit der in der zweiten Anschlussöffnung angeordneten Verschlusseinrichtung,
Figur 11b eine perspektivische Unteransicht auf das Lüftungsgerät-Luftleitungsbauteil mit der in der zweiten Anschlussöffnung angeordneten Verschlusseinrichtung,
Figur 11c eine perspektivische Schnittansicht auf das Lüftungsgerät-Luftleitungsbauteil mit der in der zweiten Anschlussöffnung angeordneten Verschlusseinrichtung,
Figur 12a eine perspektivische Ansicht auf ein Lüftungsgerät-Luftleitungsbauteil mit auf einer Seitenfläche befestigten Standfüßen, und
Figur 12b eine Seitenansicht auf das Lüftungsgerät-Luftleitungsbauteil aus Figur 12a.

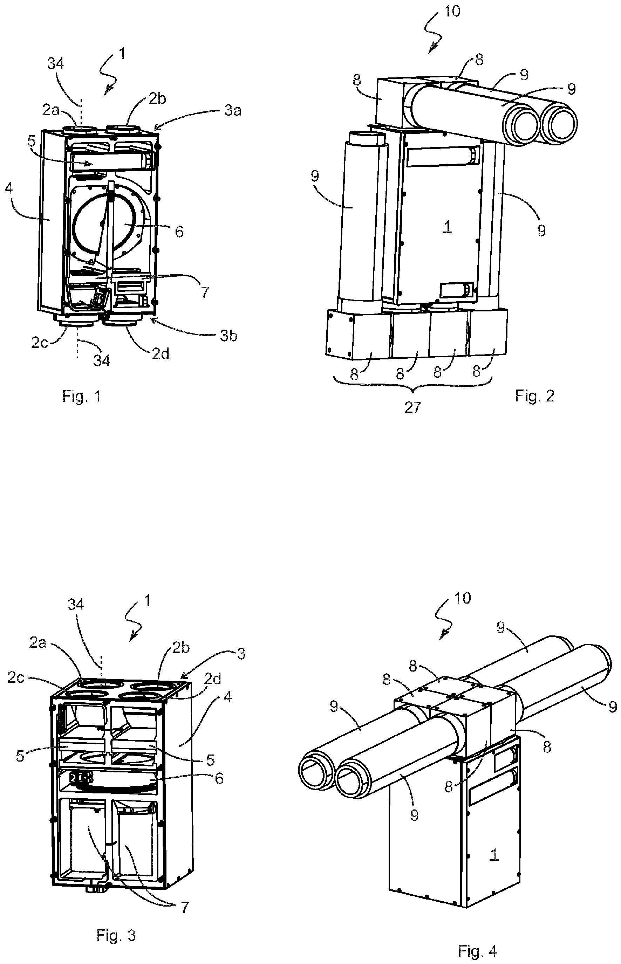

Die Figuren 1 und 3 zeigen unterschiedliche Bauformen für ein Lüftungsgerät 1, wobei in diesen Figuren die jeweiligen Frontabdeckungen des Lüftungsgerätes 1 entfernt sind, um einen Einblick in das Innere des Lüftungsgerätes 1 zu geben. Bei der in Figur 1 gezeigten Bauform des Lüftungsgerätes 1 sind zwei Kopplungsanschlüsse 2a und 2b auf einer ersten Gerätekopplungsseite 3a und zwei weitere Kopplungsanschlüsse 2c und 2d auf einer zweiten Gerätekopplungsseite 3b angeordnet. Die erste Gerätekopplungsseite 3a entspricht dabei einer Oberseite des quaderförmig ausgebildeten Lüftungsgerätes 1, wohingegen die zweite Gerätekopplungsseite 3b auf einer der ersten Gerätekopplungsseite 3a gegenüberliegenden Seite des Lüftungsgerätes 1 angeordnet ist. Demgegenüber sind bei der in Figur 3 gezeigten Bauform des Lüftungsgerätes 1 vier Kopplungsanschlüsse 2a, 2b, 2c und 2d auf einer die Oberseite des Lüftungsgerätes 1 darstellenden Gerätekopplungsseite 3 des Lüftungsgerätes 1 vorgesehen. Folglich entspricht bei der in Figur 3 gezeigten Bauform die einzige Gerätekopplungsseite 3 der Oberseite des Lüftungsgerätes 1. Bei beiden Bauformen weist das jeweilige Lüftungsgerät 1 ein Gerätegehäuse 4 auf, in welchem zum Beispiel zwei Filterelemente 5 (in Figur 1 zeigt der Pfeil für das Bezugszeichen 5 auf einen Deckel, hinter welchem die zwei Filterelemente 5 angeordnet sind) mit einer großen Filterfläche und einem geringen Druckverlust, ein Wärme-Rückgewinner 6 zur Rückgewinnung von Wärme aus einer einen Raum verlassenden Abluft und zwei geräuschminimierte Ventilatoren-Einheiten 7 untergebracht und aufgenommen sind. Alternativ zu dem Wärme-Rückgewinner 6 könnte auch ein Enthalpie-Rückgewinner verwendet werden, um Wärme und Feuchtigkeit aus der Abluft zurückzugewinnen. Die Kopplungsanschlüsse 2a, 2b, 2c und 2d dienen der Führung von verschiedenen Luftarten, wobei von den Luftarten eine Fortluft, eine Abluft, eine Außenluft und eine Zuluft umfasst sind. Dabei ist die Fortluft ein Luftstrom, welcher aus dem Lüftungsgerät 1 ins Freie geführt wird, die Abluft ein Luftstrom, welcher aus einem zu belüftenden Raum kommt und dem Lüftungsgerät 1 zugeführt wird, die Außenluft ein Luftstrom, welcher von außen unbehandelt dem Lüftungsgerät 1 zugeführt wird, und die Zuluft ein Luftstrom, welcher in dem Lüftungsgerät 1 behandelt wurde und in dem zu belüftenden Raum zugeführt wird.

Die Figuren 2 und 4 zeigen für die beiden Bauformen des Lüftungsgerätes 1 verschiedene Gestaltungsmöglichkeiten der Luftführungen, wobei die Luftführungen an dem jeweiligen Lüftungsgerät 1 von Lüftungsgerät-Luftleitungsbauteilen 8 bestimmt und definiert werden. Wie den Figuren 2 und 4 zu entnehmen ist, ist dabei jedem einzelnen Kopplungsanschluss 2a, 2b, 2c und 2d des Lüftungsgerätes 1 ein einziges Lüftungsgerät-Luftleitungsbauteil 8 zugeordnet, wobei die Lüftungsgerät-Luftleitungsbauteile 8 nach Art eines Baukastensystems angeordnet werden können. Jedes einzelne Lüftungsgerät-Luftleitungsbauteil 8 weist dabei einen Kanal zur Luftführung auf, wobei die Führung der Luft entweder geradlinig durch das Lüftungsgerät-Luftleitungsbauteil 8 hindurch oder in einem Winkel von 90° gekrümmt durch das Lüftungsgerät-Luftleitungsbauteil 8 hindurch erfolgen kann. Denn das Lüftungsgerät-Luftleitungsbauteil 8 ermöglicht beide Arten der Luftführung.

Bei der in Figur 2 gezeigten Bauform des Lüftungsgerätes 1 erfolgt die Luftführung mit Hilfe der Lüftungsgerät-Luftleitungsbauteile 8 für die Kopplungsanschlüsse 2a, 2b, 2c und 2d jeweils gekrümmt unter einem Winkel von 90°, wobei die Führung der Luft für die Kopplungsanschlüsse 2a und 2b an der ersten Gerätekopplungsseite 3a in Bezug auf das Lüftungsgerät 1 jeweils nach vorne gelenkt und geleitet wird, wohingegen die Führung der Luft für die Kopplungsanschlüsse 2c und 2d an der zweiten Gerätekopplungsseite 3b jeweils erst seitlich in Bezug auf das Lüftungsgerät 1 erfolgt, bevor mit zusätzlichen Lüftungsgerät-Luftleitungsbauteilen 8 die Luft jeweils nochmal um 90° umgelenkt und nach oben geleitet wird, wo die Luft über Rohre 9 in Richtung der ersten Gerätekopplungsseite 3a geleitet wird. Aus dem in Figur 2 gezeigten Beispiel wird ersichtlich, dass mit Hilfe eines einzigen Lüftungsgerät-Luftleitungsbauteils 8 die Führung der Luft um 90° umgeleitet werden kann, wobei die Luft dann in drei Richtungen - mit Ausnahme in Richtung des angrenzenden Lüftungsgerät-Luftleitungsbauteils 8 - seitlich umgelenkt werden kann. Berücksichtigt man, dass das Lüftungsgerät-Luftleitungsbauteil 8 auch für eine geradlinige Luftführung geeignet ist, dann kann die Luft mit Hilfe eines an dem Lüftungsgerätes 1 angeschlossenen Lüftungsgerät-Luftleitungsbauteils 8 insgesamt in vier verschiedene Richtungen (eine geradlinige Richtung und drei seitliche Richtungen) umgelenkt werden. Ferner kann mit Hilfe einer Kombination von zwei Lüftungsgerät-Luftleitungsbauteilen 8, welche strömungstechnisch miteinander verbunden sind, wie es in Figur 2 an der zweiten Gerätekopplungsseite 3b gezeigt ist, die Luft um 180° in Rohre 9 umgeleitet und in Richtung der ersten Kopplungsseite 3a umgelenkt werden. Bei dem in Figur 4 gezeigten Beispiel sind die ausschließlich an der oberen Gerätekopplungsseite 3 angeordneten Kopplungsanschlüsse 2a, 2b, 2c und 2d mit insgesamt vier Lüftungsgerät-Luftleitungsbauteilen 8 strömungstechnisch verbunden, wobei auch hier jedem einzelnen Kopplungsanschluss 2a, 2b, 2c und 2d ein einziges Lüftungsgerät-Luftleitungsbauteil 8 zugeordnet ist, welches jeweils die durch das Lüftungsgerät-Luftleitungsbauteil 8 hindurchströmende Luft um 90° umlenkt. Bei den in den Figuren 2 und 4 gezeigten Beispielen bildet das jeweilige Lüftungsgerät 1 und die Lüftungsgerät-Luftleitungsbauteile 8 ein Raumlüftungssystem 10 aus.

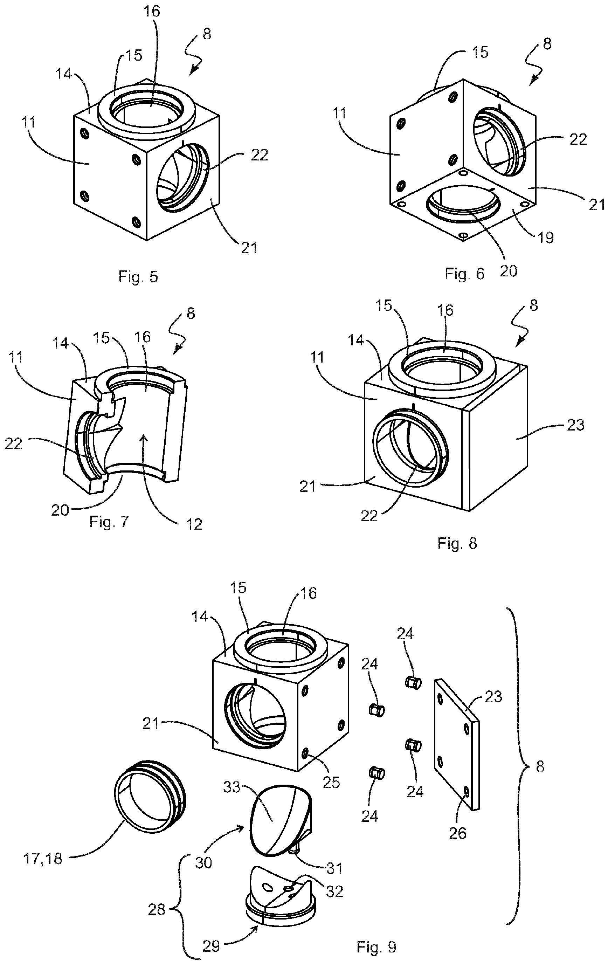

In den übrigen Figuren 5 bis 12b ist das Lüftungsgerät-Luftleitungsbauteil 8 in verschiedenen Ansichten gezeigt, worauf nachstehend Bezug genommen wird. Die Figur 5 zeigt eine perspektivische Draufsicht auf das Lüftungsgerät-Luftleitungsbauteil 8, wohingegen in Figur 6 eine perspektivische Unteransicht gezeigt ist. Das Lüftungsgerät-Luftleitungsbauteil 8 weist einen Grundkörper 11 mit einer Vielzahl von Seitenflächen auf. In dem dargestellten Ausführungsbeispiel weist der Grundkörper 11 insgesamt 6 Seitenflächen auf, welche einen Innenraum 12 des Grundkörpers 11 begrenzen, wie es aus der Schnittdarstellung der Figur 7 ersichtlich ist. Auf einer ersten Seitenfläche 14 des Grundkörpers 11 ist ein Lüftungsgerät-Geräteanschluss 15 mit einer Geräteanschlussöffnung 16 ausgebildet. Der Lüftungsgerät-Geräteanschluss 15 bzw. die Geräteanschlussöffnung 16 dient zur Verbindung mit einem der Kopplungsanschlüsse 2a, 2b, 2c, 2d des Lüftungsgeräts 1, so dass ein Kopplungsanschluss 2a, 2b, 2c, 2d mit der Geräteanschlussöffnung 16 des Lüftungsgerät-Luftleitungsbauteils 8 strömungsverbunden ist und Luft durch das Lüftungsgerät-Luftleitungsbauteil 8 hindurch entweder zu dem Lüftungsgerät 1 hin oder von dem Lüftungsgerät 1 weg geleitet werden kann. Dabei strömt Luft von der Geräteanschlussöffnung 16 durch den Innenraum 12 des Grundkörpers 11 zu einem ersten Anschluss 17 bzw. einer ersten Anschlussöffnung 20 oder zu einem zweiten Anschluss 18 bzw. einer zweiten Anschlussöffnung 22.

Der erste Anschluss 17 und die erste Anschlussöffnung 20 sind auf einer zweiten Seitenfläche 19 des Grundkörpers 11 ausgebildet. Wie aus Figur 6 ersichtlich ist, ist die erste Seitenfläche 14 der zweiten Seitenfläche 19 gegenüberliegend angeordnet ausgebildet, so dass die Geräteanschlussöffnung 16 der ersten Anschlussöffnung 20 gegenüberliegend angeordnet ausgebildet ist. Insbesondere sind die Geräteanschlussöffnung 16 und die erste Anschlussöffnung 20 unter einem Winkel von 180° zueinander angeordnet.

Der zweite Anschluss 18 und die zweite Anschlussöffnung 22 sind auf einer dritten Seitenfläche 21 des Grundkörpers 11 ausgebildet. Wie beispielsweise Figur 6 zu entnehmen ist, verbindet die dritte Seitenfläche 21 die erste Seitenfläche 14 mit der zweiten Seitenfläche 19. Dabei geht aus den Figuren 6 und 7 hervor, dass die Geräteanschlussöffnung 16 auf der ersten Seitenfläche 14 und die zweite Anschlussöffnung 22 auf der dritten Seitenfläche 21 unter einem Winkel von 90° zueinander angeordnet sind.

Sowohl der erste Anschluss 17 als auch der zweite Anschluss 18 dienen dazu, entweder Zuluft oder Fortluft von dem Lüftungsgerät 1 wegzuleiten oder Abluft oder Außenluft zu dem Lüftungsgerät 1 hinzuleiten. Dabei handelt es sich bei dem ersten und zweiten Anschluss 17 und 18 um ein einziges und identisches Bauteil, welches je nach gewünschter Führung der Luft durch den Grundkörper 11 hindurch entweder in die erste Anschlussöffnung 20 oder in die zweite Anschlussöffnung 22 eingesetzt angeordnet ist, so dass die Anzahl der Bauteile des Lüftungsgerät-Luftleitungsbauteils 8 durch die flexible Verwendung des einzigen Anschluss-Bauteils 17 bzw. 18 auf ein Minimum reduziert werden kann. Der Grundkörper 11 des Lüftungsgerät-Luftleitungsbauteils 8 weist in dem dargestellten Ausführungsbeispiel die Form eines Würfels auf, wobei auch davon abweichende Formen denkbar sind. Der Grundkörper sollte dabei allgemein die Form eines extrudierten Vierecks oder die Form eines Quaders aufweisen, um die durch die Erfindung gegebene Flexibilität hinsichtlich der Führung der Luft realisieren zu können und um gleichzeitig ein Minimum an Einbauraum in Anspruch zu nehmen. Dabei bietet die viereckige oder quaderförmige Form die Möglichkeit, dass die Lüftungsgerät-Luftleitungsbauteile 8 bündig mit dem Gerätegehäuse 4 des Lüftungsgerätes 1 abschließen und optisch den Eindruck einer einzigen Baueinheit vermitteln.

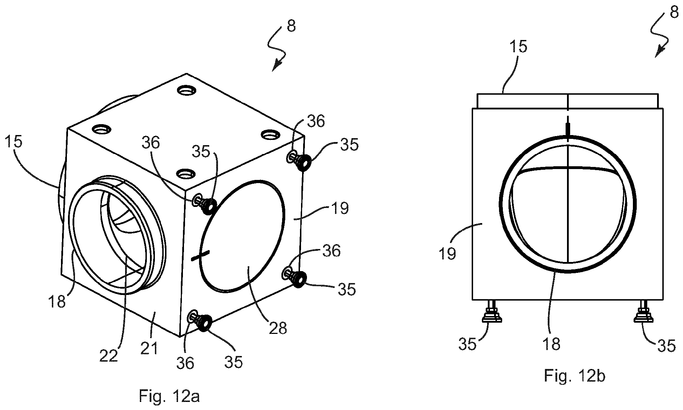

Die Figuren 8 und 9 zeigen verschiedene Ansichten für das Lüftungsgerät-Luftleitungsbauteil 8, wobei in Figur 8 eine Abdeckplatte 23 an einer Seitenfläche des Grundkörpers 11 lösbar befestigt ist. Mit Hilfe der Abdeckplatte 23 kann beispielsweise eine fluchtende Fläche zu dem Gerätegehäuse 4 des Lüftungsgerätes 1 entstehen, was die optische Erscheinung des aus mehreren Lüftungsgerät-Luftleitungsbauteilen 8 und dem Lüftungsgerät 1 bestehenden Raumlüftungssystems 10 verbessert. Die lösbare Verbindung zwischen dem Grundkörper 11 und der Abdeckplatte 23 wird dabei von Verbindungsbolzen 24 realisiert, welche in Aufnahmeausnehmungen 25 in dem Grundkörper 11 und in Ausnehmungen 26 in der Abdeckplatte 23 (siehe zum Beispiel Figur 9) eingesteckt und dort lösbar befestigt sind. Solche Aufnahmeausnehmungen 25 sind an mindestens einer Seitenfläche des Grundkörpers 11, welche an die die Geräteanschlussöffnung 16 aufweisende erste Seitenfläche 14 angrenzt, vorhanden. Dabei dienen die in die Aufnahmeausnehmungen 25 des Grundkörpers 11 eingesteckten Verbindungsbolzen 24 nicht nur dazu, um eine Abdeckplatte 23 fixieren zu können. Vielmehr können mit Hilfe der Verbindungsbolzen 24 auch zwei nebeneinander liegend angeordnete Lüftungsgerät-Luftleitungsbauteile 8 miteinander verbunden werden, wie es in den Figuren 2 und 4 gezeigt ist, was die Stabilität der Anordnung erhöht. Wie ferner der Figur 2 zu entnehmen ist, können die unterhalb des Lüftungsgerätes 1 angeordneten Lüftungsgerät-Luftleitungsbauteile 8 ferner als ein Sockel 27 dienen, auf welchem das Lüftungsgerät 1 steht. Von Vorteil ist es dabei, wenn bei einem als Sockel 27 dienenden Lüftungsgerät-Luftleitungsbauteil 8 an der zweiten Seitenfläche 19 mehrere Standfüße 35 lösbar befestigt sind. Eine solche Ausführung ist in den Figuren 12a und 12b gezeigt, wo insgesamt vier Standfüße 35 auf der zweiten Seitenfläche 19 angebracht sind. Bei der in den Figuren 12a und 12b gezeigten Ausführung sind die Standfüße 35 an dem Lüftungsgerät-Luftleitungsbauteil 8 lösbar befestigt, wobei für die lösbare Verbindung entsprechende Einlegeteile 36 vorgesehen sind, die in das Material der zweiten Seitenfläche 19 des Lüftungsgerät-Luftleitungsbauteils 8 eingeschweißt sind. Die Einlegeteile 36 sind dabei als Gewindeelemente ausgebildet, so dass die Standfüße 35 in die jeweiligen Einlegeteile 36 eingeschraubt sind. Alternativ ist es auch denkbar, dass anstelle der lösbaren Verbindung eine Verbindung vorgesehen sein kann, bei welcher die Standfüße 35 nicht ohne Beschädigung des Lüftungsgerät-Luftleitungsbauteils 8 von der zweiten Seitenfläche 19 entfernt werden können. Es ist ersichtlich, dass eine Ausgestaltung mit Standfüßen 35 nur dann in Betracht kommt, wenn die Luftführung von der Geräteanschlussöffnung 16 zu der zweiten Anschlussöffnung 22 erfolgt und die Luft innerhalb des Lüftungsgerät-Bauteils 8 um 90° umgelenkt wird.

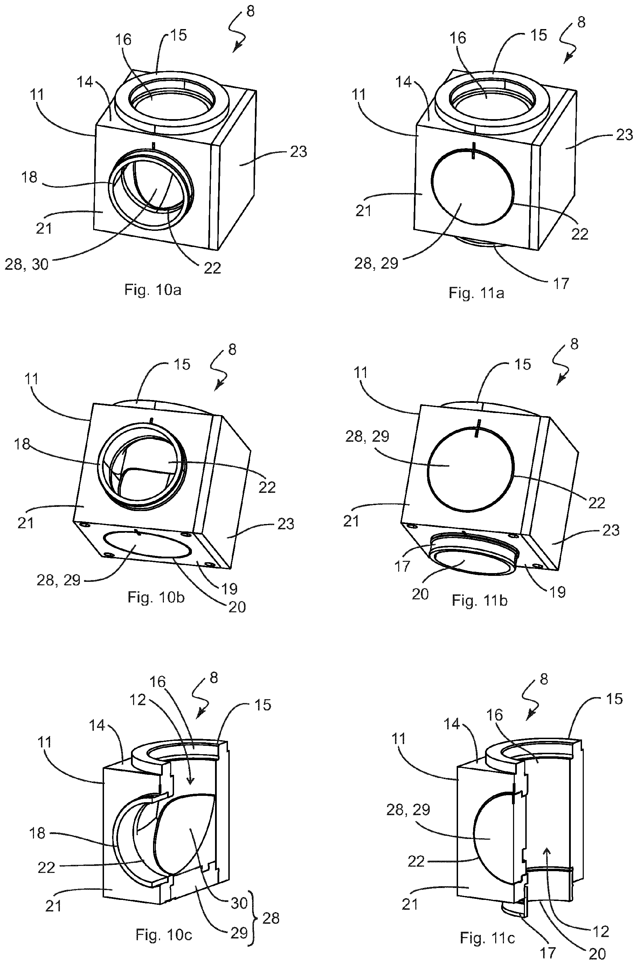

Der Lüftungsgerät-Geräteanschluss 15 eines Lüftungsgerät-Luftleitungsbauteils 8 ist in jedem Fall immer mit einem der Kopplungsanschlüsse 2a, 2b, 2c, 2d des Lüftungsgerätes 1 strömungsverbunden, wie es aus den Figuren 2 und 4 hervorgeht, wobei ein Lüftungsgerät-Geräteanschluss 15 des Lüftungsgerät-Luftleitungsbauteils 8 und ein zugeordneter Kopplungsanschluss 2a, 2b, 2c oder 2d des Lüftungsgerätes 1 zusammensteckbar ausgebildet sind. Wie die Führung der Luft zu dem Lüftungsgerät 1 hin oder von dem Lüftungsgerät 1 weg erfolgen soll, ist dabei sehr flexibel gestaltbar, wie die Figuren 2 und 4 zeigen. Für die Luftführung ist daher bei Installation zu entscheiden, ob die Luft durch die erste Anschlussöffnung 20 oder durch die zweite Anschlussöffnung 22 geleitet werden soll. Mit Hilfe einer in Figur 9 gezeigten Verschlusseinrichtung 28 wird die Luftführung durch das Innenraum 12 festgelegt, wobei die Verschlusseinrichtung 28 zum dichtenden Verschließen der ersten Anschlussöffnung 20 oder der zweiten Anschlussöffnung 22 ausgebildet ist. Entweder ist die Verschlusseinrichtung 28 derart angeordnet, dass die die Verschlusseinrichtung 28 die erste Anschlussöffnung 20 dichtend verschließt (siehe Figuren 10a, 10b und 10c), so dass die Geräteanschlussöffnung 16 über den Innenraum 12 mit der zweiten Anschlussöffnung 22 strömungsverbunden ist. Oder aber die Verschlusseinrichtung 28 ist derart angeordnet, dass die Verschlusseinrichtung 28 die zweite Anschlussöffnung 22 dichtend verschließt (siehe Figuren 11a, 11b und 11c), so dass die Geräteanschlussöffnung 16 über den Innenraum 12 mit der ersten Anschlussöffnung 20 strömungsverbunden ist. Wie der Figur 9 zu entnehmen ist, weist die Verschlusseinrichtung 28 ein Stopfen-Element 29 auf. Dieses Stopfen-Element 29 wird in Abhängigkeit der gewünschten Führung der Luft entweder innerhalb der ersten Anschlussöffnung 20 der innerhalb der zweiten Anschlussöffnung 22 angeordnet. Das Anordnen des Stopfen-Elements 29 innerhalb der ersten Anschlussöffnung 20 oder der zweiten Anschlussöffnung 22 kann dabei entweder mit Hilfe einer Verklebung, welche das Stopfen-Element 29 stoffschlüssig in der entsprechenden Anschlussöffnung 20 oder 22 befestigt, oder mit Hilfe einer lösbaren Klemmverbindung, bei welcher das Stopfen-Element 29 ein gewisses Übermaß im Vergleich zum Durchmesser der entsprechenden Anschlussöffnung 20 oder 22 aufweist und klemmend in die gewünschte Anschlussöffnung 20 oder 22 eingepresst wird, erfolgen. Für die Ausführung mit Standfüßen 35 (siehe Figuren 12a und 12b) ist es dabei ersichtlich, dass dann die Verschlusseinrichtung 28 die erste Anschlussöffnung 20 verschließen muss.

Die Verschlusseinrichtung 28 kann ferner ein Umlenkelement 30 aufweisen (siehe Figuren 9 und 10c), um bei einer Umlenkung der Luft um 90° Strömungsverluste zu reduzieren. Das Umlenk-Element 30 ist dabei lösbar mit dem Stopfen-Element 29 über eine Steckverbindung verbunden, wobei zu diesem Zweck an dem Umlenk-Element 30 wenigstens ein Verbindungszapfen 31 ausgebildet ist, welcher in eine an dem Stopfen-Element 29 ausgebildete Verbindungsaufnahme 31 einsteckbar ist, so dass sich das Umlenk-Element 30 innerhalb des Innenraumes 12 erstreckt. Dabei ist das Umlenk-Element 30 mit einer von der Geräteanschlussöffnung 16 hin zu der zweiten Anschlussöffnung 22 gekrümmt verlaufenden und zur Strömungsumlenkung dienenden Wölbung 33 ausgebildet, wie zum Beispiel aus der Figur 10c ersichtlich ist. Denkbar ist es in alternativer Ausführung auch, dass das Stopfen-Element 29 mit dem Umlenk-Element 30 verklebt wird, bevor die Verschlusseinrichtung 28 an dem Lüftungsgerät-Luftleitungsbauteil 8 angebracht wird.

Wenn die Verschlusseinrichtung 28 die erste Anschlussöffnung 20 dichtend verschließt, dann wird die Luft innerhalb des Lüftungsgerät-Luftleitungsbauteils 8 in jedem Fall um 90° in Bezug auf das Lüftungsgerät 1 und den zugeordneten Kopplungsanschluss 2a, 2b, 2c oder 2d umgelenkt. Dabei kann die zweite Anschlussöffnung 22 des Lüftungsgerät-Luftleitungsbauteils 8 in verschiedene Richtungen weisen, da das Lüftungsgerät-Luftleitungsbauteils 8 um eine Achse 34 (siehe Figuren 1 und 3), die durch den mit dem Lüftungsgerät 1 verbundenen Kopplungsanschluss 2a, 2b, 2c, 2d verläuft, relativ verdrehbar ausgebildet ist, wie es auch die Figuren 2 und 4 zeigen.

Wie vorstehend bereits angeführt, strömt Luft von dem mit dem Lüftungsgerät 1 strömungsverbundenen Lüftungsgerät-Geräteanschluss 15 bzw. von der Geräteanschlussöffnung 16 in den Innenraum 12 des Grundkörpers 11. Je nach gewünschter Führung der Luft wird die Luft dann über den ersten Anschluss 17 bzw. die erste Anschlussöffnung 20 oder über den zweiten Anschluss 18 bzw. die zweite Anschlussöffnung 22 geleitet. Dabei ist die Luftführung mit Hilfe der Verschlusseinrichtung 28 individuell anpassbar, wie die Figuren 10a bis 11c zeigen. Die Figuren 10a, 10b und 10c zeigen verschiedene Ansichten des Lüftungsgerät-Luftleitungsbauteils 8, bei welchem das Stopfen-Element 29 der Verschlusseinrichtung 28 die erste Anschlussöffnung 20 dichtend verschließt (siehe zum Beispiel Figur 10b). Das Umlenk-Element 30 ist dabei mit dem Stopfen-Element 29 verbunden und sorgt für eine glatte und stetige Umlenkung der durch den Grundkörper 11 strömenden Luft (siehe beispielsweise Figur 10c). Demgegenüber verschließt in den Figuren 11a, 11b und 11c das Stopfen-Element 29 der Verschlusseinrichtung 28 die zweite Anschlussöffnung 22, so dass eine Führung der Luft innerhalb des Grundkörpers 11 von der Geräteanschlussöffnung 16 zu der ersten Anschlussöffnung 20 geradlinig verläuft. Bei dieser geradlinigen Führung der Luft ist kein Umlenk-Element 30 erforderlich.

In den gezeigten Beispielen der Figuren 10a bis 10c und 11a bis 11c sind die Kantenlängen der Lüftungsgerät-Luftleitungsbauteile 8 gleich lang, so dass ein in sich zusammensteckbares System aus Lüftungsgerät-Luftleitungsbauteilen 8 entsteht, welches im Idealfall mit den Außenabmessungen des Lüftungsgerätes 1 zusammenpasst.

Der Grundkörper 11 und/oder die Verschlusseinrichtung 28 bestehen aus einem dampfdiffusionsdichten und/oder wärmeisolierenden Werkstoff, wobei dieser Werkstoff zum Beispiel ein thermoplastischer Kunststoff sein kann. Dabei ist es ferner denkbar, dass der Grundkörper 11 aus einem expandierten Polypropylen (EPP) gebildet ist.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird.

## Patentansprüche

1. Raumlüftungssystem (10) mit einem Lüftungsgerät (1) und wenigstens zwei Lüftungsgerät-Luftleitungsbauteilen (8),
wobei das Lüftungsgerät (1) ein Gerätegehäuse (4) aufweist, in welchem wenigstens ein Filterelement (5), wenigstens ein Wärme-Rückgewinner (6) und wenigstens eine Ventilatoren-Einheit (7) untergebracht sind, wobei das Gerätegehäuse (4) wenigstens eine Gerätekopplungsseite (3; 3a, 3b) mit wenigstens zwei Kopplungsanschlüssen (2a, 2b, 2c, 2d) aufweist, und wobei ein jeweiliger Kopplungsanschluss (2a, 2b, 2c, 2d) des Lüftungsgerätes (1) mit einer Geräteanschlussöffnung (16) strömungsverbunden ist,
wobei ein jeweiliges Lüftungsgerät-Luftleitungsbauteil (8) einen Grundkörper (11) mit einer Vielzahl von Seitenflächen aufweist, welche einen Innenraum (12) des Grundkörpers (11) begrenzen,
wobei auf einer ersten Seitenfläche (14) des Grundkörpers (11) die Geräteanschlussöffnung (16) ausgebildet ist,
wobei auf einer zweiten Seitenfläche (19) des Grundkörpers (11) eine erste Anschlussöffnung (20) ausgebildet ist,
wobei die erste Seitenfläche (14) der zweiten Seitenfläche (19) gegenüberliegend angeordnet ausgebildet ist und somit die Geräteanschlussöffnung (16) der ersten Anschlussöffnung (20) gegenüberliegend angeordnet ausgebildet ist,
**dadurch gekennzeichnet, dass** auf einer dritten Seitenfläche (21) des Grundkörpers (11) eine zweite Anschlussöffnung (22) ausgebildet ist,
wobei die dritte Seitenfläche (21) die erste Seitenfläche (14) mit der zweiten Seitenfläche (19) verbindet,
wobei an dem Grundkörper (11) eine Verschlusseinrichtung (28) befestigt ist, und
wobei die Verschlusseinrichtung (28) entweder die erste Anschlussöffnung (20) dichtend verschließend angeordnet ist, so dass die Geräteanschlussöffnung (16) über den Innenraum (12) mit der zweiten Anschlussöffnung (22) strömungsverbunden ist, oder die zweite Anschlussöffnung (22) dichtend verschließend angeordnet ist, so dass die Geräteanschlussöffnung (16) über den Innenraum (12) mit der ersten Anschlussöffnung (20) strömungsverbunden ist.

2. Raumlüftungssystem (10) nach Anspruch 1, wobei ein jeweiliges Lüftungsgerät-Luftleitungsbauteil (8) um eine Achse (34), die durch den mit dem Lüftungsgerät (1) verbundenen Kopplungsanschluss (2a, 2b, 2c, 2d) verläuft, relativ verdrehbar ausgebildet ist.

3. Raumlüftungssystem (10) nach Anspruch 1 oder 2, wobei die Geräteanschlussöffnung (16) des Lüftungsgerät-Luftleitungsbauteils (8) und ein zugeordneter Kopplungsanschluss (2a, 2b, 2c, 2d) des Lüftungsgerätes (1) zusammensteckbar ausgebildet sind.

4. Raumlüftungssystem (10) nach einem der Ansprüche 1 bis 3, wobei an der zweiten Seitenfläche (19) eines jeweiligen Lüftungsgerät-Luftleitungsbauteils (8) mehrere Standfüße (35) befestigt sind und die wenigstens zwei Lüftungsgerät-Luftleitungsbauteile (8) als das Lüftungsgerät (1) tragende Sockel (27) ausgebildet sind.

5. Raumlüftungssystem (10) nach Anspruch 4, wobei ein jeweiliger Standfuß (35) über ein in die zweite Seitenfläche (19) eingeschweißtes Einlegeteil (36) an der zweiten Seitenfläche (19) lösbar befestigt ist.

6. Raumlüftungssystem (10) nach Anspruch 1, wobei der Grundkörper (11) die Form eines extrudierten Vierecks aufweist.

7. Raumlüftungssystem (10) nach Anspruch 1 oder 6, wobei der Grundkörper (11) die Form eines Quaders aufweist.

8. Raumlüftungssystem (10) nach einem der Ansprüche 1, 6 oder 7, wobei die Geräteanschlussöffnung (16) und die erste Anschlussöffnung (20) unter einem Winkel von 180° zueinander angeordnet sind.

9. Raumlüftungssystem (10) nach einem der Ansprüche 1, 6, 7 oder 8, wobei die Geräteanschlussöffnung (16) und die zweite Anschlussöffnung (22) unter einem Winkel von 90° zueinander angeordnet sind.

10. Raumlüftungssystem (10) nach einem der Ansprüche 1, 6, 7, 8 oder 9, wobei die Verschlusseinrichtung (28), wenn die Verschlusseinrichtung (28) die erste Anschlussöffnung (20) dichtend verschließend angeordnet ist, mit einem Stopfen-Element (29) und einem Umlenk-Element (30) ausgebildet ist, wobei das Stopfen-Element (29) innerhalb der ersten Anschlussöffnung (20) befestigt ist und die erste Anschlussöffnung (20) dichtend verschließt, und wobei das Umlenk-Element (30) mit dem Stopfen-Element (29) verbunden ist und sich innerhalb des Innenraumes (12) erstreckt.

11. Raumlüftungssystem (10) nach Anspruch 10, wobei das Umlenk-Element (30) mit einer von der Geräteanschlussöffnung (16) hin zu der zweiten Anschlussöffnung (22) gekrümmt verlaufenden und zur Strömungsumlenkung dienenden Wölbung (33) ausgebildet ist.

12. Raumlüftungssystem (10) nach einem der Ansprüche 1, 6, 7, 8, 9, 10 oder 11, wobei an mindestens einer Seitenfläche des Grundkörpers (11), welche an die die Geräteanschlussöffnung (16) aufweisende erste Seitenfläche (14) angrenzt, mindestens eine zur lösbaren Verbindung mit einem Verbindungsbolzen (24) ausgebildete Aufnahmeausnehmung (25) ausgebildet ist.

13. Raumlüftungssystem (10) nach einem der Ansprüche 1, 6, 7, 8, 9, 10, 11 oder 12, wobei der Grundkörper (11) aus einem dampfdiffusionsdichten und/oder wärmeisolierenden Werkstoff besteht.

14. Raumlüftungssystem (10) nach einem der Ansprüche 1, 6, 7, 8, 9, 10, 11, 12 oder 13, wobei der Grundkörper (11) aus einem thermoplastischen Kunststoff besteht.

## Claims

1. A room ventilation system (10) with a ventilation device (1) and at least two ventilation device air ducting components (8),
wherein the ventilation device (1) has a device housing (4), in which at least one filter element (5), at least one heat recovery unit (6) and at least one fan unit (7) are accommodated, wherein the device housing (4) has at least one device coupling side (3; 3a, 3b) with at least two coupling connections (2a, 2b, 2c, 2d), and wherein a respective coupling connection (2a, 2b, 2c, 2d) of the ventilation device (1) is fluidically connected to a device connection opening (16),
wherein a respective ventilation device air ducting component (8) has a base body (11) with a plurality of lateral surfaces that delimit an interior space (12) of the base body (11),
wherein the device connection opening (16) is formed on a first lateral surface (14) of the base body (11),
wherein a first connection opening (20) is formed on a second lateral surface (19) of the base body (11), and
wherein the first lateral surface (14) is arranged opposite of the second lateral surface (19) and the device connection opening (16) therefore is arranged opposite of the first connection opening (20),
**characterized in that**
a second connection opening (22) is formed on a third lateral surface (21) of the base body (11),
wherein the third lateral surface (21) connects the first lateral surface (14) to the second lateral surface (19),
wherein a closure device (28) is fastened on the base body (11), and
wherein the closure device (28) either is arranged so as to close the first connection opening (20) in a sealing manner such that the device connection opening (16) is fluidically connected to the second connection opening (22) via the interior space (12) or arranged so as to close the second connection opening (22) in a sealing manner such that the device connection opening (16) is fluidically connected to the first connection opening (20) via the interior space (12).

2. The room ventilation system (10) according to claim 1, wherein a respective ventilation device air ducting component (8) is designed so as to be relatively rotatable about an axis (34) that extends through the coupling connection (2a, 2b, 2c, 2d) connected to the ventilation device (1).

3. The room ventilation system (10) according to claim 1 or 2, wherein the device connection opening (16) of the ventilation device air ducting component (8) and an associated coupling connection (2a, 2b, 2c, 2d) of the ventilation device (1) are designed so as to be intermateable.

4. The room ventilation system (10) according to one of claims 1 to 3, wherein multiple support legs (35) are fastened on the second lateral surface (19) of a respective ventilation device air ducting component (8) and the at least two ventilation device air ducting components (8) are designed in the form of pedestals (27) that carry the ventilation device (1).

5. The room ventilation system (10) according to claim 4, wherein a respective support leg (35) is separably fastened on the second lateral surface (19) by means of an insert part (36) that is welded into the second lateral surface (19).

6. The room ventilation system (10) according to claim 1, wherein the base body (11) has the shape of an extruded quadrangle.

7. The room ventilation system (10) according to claim 1 or 6, wherein the base body (11) has the shape of a cuboid.

8. The room ventilation system (10) according to one of claims 1, 6 or 7, wherein the device connection opening (16) and the first connection opening (20) are arranged at an angle of 180° to one another.

9. The room ventilation system (10) according to one of claims 1, 6, 7 or 8, wherein the device connection opening (16) and the second connection opening (22) are arranged at an angle of 90° to one another.

10. The room ventilation system (10) according to one of claims 1, 6, 7, 8 or 9, wherein the closure device (28) is designed with a stopper element (29) and a deflection element (30) if the closure device (28) is arranged so as to close the first connection opening (20) in a sealing manner, wherein the stopper element (29) is fastened within the first connection opening (20) and closes the first connection opening (20) in a sealing manner, and wherein the deflection element (30) is connected to the stopper element (29) and extends within the interior space (12).

11. The room ventilation system (10) according to claim 10, wherein the deflection element (30) is designed with an arching (33) that extends from the device connection opening (16) to the second connection opening (22) in a curved manner and serves for deflecting the flow.

12. The room ventilation system (10) according to one of claims 1, 6, 7, 8, 9, 10 or 11, wherein at least one receptacle recess (25), which is designed for being separably connected to a connecting bolt (24), is formed on at least one lateral surface of the base body (11) that borders on the first lateral surface (14) having the device connection opening (16).

13. The room ventilation system (10) according to one of claims 1, 6, 7, 8, 9, 10, 11 or 12, wherein the base body (11) consists of a vapor diffusion-tight and/or heat-insulating material.

14. The room ventilation system (10) according to one of claims 1, 6, 7, 8, 9, 10, 11, 12 or 13, wherein the base body (11) consists of a thermoplastic polymer.

## Revendications

1. Système de ventilation (10) de locaux, pourvu d'un dispositif de ventilation (1) et d'au moins deux éléments conducteurs d'air (8) du dispositif de ventilation,
le dispositif de ventilation (1) comportant un carter de dispositif (4) dans lequel sont logés au moins un élément filtrant (5), au moins un récupérateur de chaleur (6) et au moins une unité de ventilateurs (7), le carter de dispositif (4) comportant au moins un côté de raccordement (3 ; 3a, 3b) du dispositif, pourvu d'au moins deux raccords de raccordement (2a, 2b, 2c, 2d) et un raccord de raccordement (2a, 2b, 15 2c, 2d) respectif du dispositif de ventilation (1) se trouvant en liaison fluidique avec un orifice de raccordement (16) du dispositif,
un élément conducteur d'air (8) du dispositif de ventilation comportant un corps de base (11) comprenant une pluralité de surfaces latérales, lesquelles délimitent un espace intérieur (12) du corps de base (11),
sur une première surface latérale (14) du corps de base (11) étant conçu l'orifice de raccordement (16) du dispositif,
sur une deuxième surface latérale (19) du corps de base (11) étant conçu un premier orifice de raccordement (20),
la première surface latérale (14) étant conçue en étant placée au vis-à-vis de la deuxième surface latérale (19) et ainsi, l'orifice de raccordement (16) du dispositif est conçu en étant placé au vis-à-vis du premier orifice de raccordement (20),
**caractérisé en ce que**
sur une troisième surface latérale (21) du corps de base (11) est conçu un deuxième orifice de raccordement (22), la troisième surface latérale (21) reliant la première surface latérale (14) avec la deuxième surface latérale (19),
sur le corps de base (11) étant fixé un système de fermeture (28) et
le système de fermeture (28) étant placé soit, en fermant de manière à en assurer l'étanchéité le premier orifice de raccordement (20), de telle sorte que l'orifice de raccordement (16) du dispositif se trouve en liaison fluidique par l'intermédiaire de l'espace intérieur (12) avec le deuxième orifice de raccordement (22) ou étant placé en fermant de manière à en assurer l'étanchéité le deuxième orifice de raccordement (22), de telle sorte que l'orifice de raccordement (16) du dispositif se trouve en liaison fluidique par l'intermédiaire de l'espace intérieur (12) avec le premier orifice de raccordement (20).

2. Système de ventilation (10) de locaux selon la revendication 1, un élément conducteur d'air (8) respectif du dispositif de ventilation étant conçu en étant rotatif autour d'un axe (34), qui s'écoule à travers le raccord de raccordement (2a, 2b, 2c, 2d) relié avec le dispositif de ventilation (1).

3. Système de ventilation (10) de locaux selon la revendication 1 ou 2, l'orifice de raccordement (16) de dispositif de l'élément conducteur d'air (8) du dispositif de ventilation et un raccord de raccordement (2a, 2b, 2c, 2d) associé du dispositif de ventilation (1) étant conçus en étant mutuellement emboîtables.

4. Système de ventilation (10) de locaux selon l'une quelconque des revendications 1 à 3, sur la deuxième surface latérale (19) d'un élément conducteur d'air (8) respectif du dispositif de ventilation étant fixés plusieurs pieds de support (35) et les au moins deux éléments conducteurs d'air (8) du dispositif de ventilation étant conçus sous la forme d'un socle (27) portant le dispositif de ventilation (1).

5. Système de ventilation (10) de locaux selon la revendication 4, par l'intermédiaire d'une pièce d'insertion (36) soudée dans la deuxième surface latérale (19), un pied de support (35) respectif étant fixé de manière amovible sur la deuxième surface latérale (19).

6. Système de ventilation (10) de locaux selon la revendication 1, le corps de base (11) présentant la forme d'un carré extrudé.

7. Système de ventilation (10) de locaux selon la revendication 1 ou 6, le corps de base (11) présentant la forme d'un parallélépipède.

8. Système de ventilation (10) de locaux selon l'une quelconque des revendications 1, 6 ou 7, l'orifice de raccordement (16) du dispositif et le premier orifice de raccordement (20) étant placés l'un par rapport à l'autre sous un angle de 180 °.

9. Système de ventilation (10) de locaux selon l'une quelconque des revendications 1, 6, 7 ou 8, l'orifice de raccordement (16) du dispositif et le deuxième orifice de raccordement (22) étant placés l'un par rapport à l'autre sous un angle de 90 °.

10. Système de ventilation (10) de locaux selon l'une quelconque des revendications 1, 6, 7, 8 ou 9, lorsque le système de fermeture (28) est placé de sorte à fermer le premier orifice de raccordement (20) de sorte à en assurer l'étanchéité, le système de fermeture (28) étant conçu avec un élément formant bouchon (29) et avec un élément de renvoi (30), l'élément formant bouchon (29) étant fixé à l'intérieur du premier orifice de raccordement (20) et fermant de manière à en assurer l'étanchéité le premier orifice de raccordement (20) et l'élément de renvoi (30) étant relié avec l'élément formant bouchon (29) et s'étendant à l'intérieur de l'espace intérieur (12) .

11. Système de ventilation (10) de locaux selon la revendication 10, l'élément de renvoi (30) étant conçu avec une voussure (33) s'écoulant de manière curviligne de l'orifice de raccordement (16) du dispositif vers le deuxième orifice de raccordement (22) et servant à renvoyer le flux.

12. Système de ventilation (10) de locaux selon l'une quelconque des revendications 1, 6, 7, 8, 9, 10 ou 11, sur au moins une surface latérale de corps de base (11), laquelle est adjacente à la première surface latérale (14) comportant l'orifice de raccordement (16) du dispositif étant conçu au moins un évidement de logement (25) conçu pour la liaison amovible avec un boulon de liaison (24).

13. Système de ventilation (10) de locaux selon l'une quelconque des revendications 1, 6, 7, 8, 9, 10, 11 ou 12, le corps de base (11) consistant en une matière étanche à la diffusion de vapeur et / ou isolante thermique.

14. Système de ventilation (10) de locaux selon l'une quelconque des revendications 1, 6, 7, 8, 9, 10, 11, 12 ou 13, le corps de base (11) consistant en une matière thermoplastique.
